# DEMANDE DE BREVET EUROPEEN

(11) **EP 4 775 030 A1**
(43) Date de publication de la demande: **15.07.2026**
(21) Numéro de dépôt: 26151687.6
(22) Date de dépôt: 13.01.2026
(51) Int. Cl.: A01M 1/22, A01M 5/00, A01G 7/04

(54) **MODULE DE PROTECTION DU VÉGÉTAL**

(30) Priorité: 13.01.2025 FR 2500341
(71) Demandeur: Naotec, 17800 Pons (FR)
(72) Inventeur: SANDOVAL, Laure, 87100 Limoges (FR)
(74) Mandataire: Aquinov

(57) **Abrégé**

L'invention concerne un module de protection du végétal (1) comprenant un châssis (2) sur lequel est montée au moins une unité (5), une unité (5) munie d'une ouverture et dans lequel est agencé au moins une source lumineuse apte à émettre un rayonnement dans le spectre infrarouge en direction de l'ouverture.

Selon l'invention, ladite au moins une source lumineuse comprend une lampe infrarouge (10).Selon l'invention, ladite au moins une source lumineuse comprend une lampe infrarouge (3).

## Description

La présente invention concerne le domaine technique des modules de protection du végétal.

Dans le milieu de la production agricole, il existe une inquiétude concernant les nuisibles. Par exemple, les producteurs d'asperges font face à de nombreuses difficultés pour contrôler les populations de criocères, un ravageur majeur dans cette culture. Historiquement, l'usage de produits phytosanitaires tels que le « SUCCES^{®} » (insecticides « spinosad^{®} ») a permis de maîtriser cette population.

Cependant, l'utilisation de produits phytosanitaires a des effets néfastes sur l'environnement et multiplie les risques sanitaires. De plus certains insecticides sont interdits ou vont être interdits prochainement.

Les producteurs sont donc contraints de trouver des alternatives.

Une solution classique consiste à disposer des filets de protection. Cette solution n'offre qu'une solution passive contre les insectes, sans agir directement sur la population.

Une autre solution est l'élimination manuelle. Le retrait manuel des insectes est en effet une pratique répandue. Bien qu'efficace à petite échelle, cette méthode est laborieuse et peu rentable sur de grandes surfaces.

L'invention vise à pallier ces inconvénients en proposant un module de protection du végétal facile à mettre en œuvre et peu coûteux.

L'invention concerne un module de protection du végétal comprenant un châssis sur lequel est montés au moins une unité, une unité munie d'une ouverture et dans lequel est agencé au moins une source lumineuse apte à émettre un rayonnement dans le spectre infrarouge en direction de l'ouverture.

Selon l'invention, ladite au moins une source lumineuse comprend une lampe infrarouge.

Des recherches ont en effet été menées sur l'utilisation de technologies thermiques dans la gestion des insectes nuisibles, notamment par chauffage par haute température, vapeur et infrarouges ont été menées. Ces technologies visent à détruire les insectes sans recourir à des produits chimiques.

Par exemple, le chauffage infrarouge pour le contrôle des insectes est une méthode étudiée dans le cadre de la gestion des insectes en agriculture, notamment pour désinfecter ou éliminer les insectes nuisibles en déstabilisant leur biologie.

Contrairement aux méthodes classiques, l'infrarouge chauffe préférentiellement les insectes, permettant de maintenir la santé des végétaux tout en éliminant les ravageurs.

De plus, cette technologie présente un avantage significatif en termes de productivités. L'absence de délai de réentrée des travailleurs (DRE) permet une gestion continue des cultures végétales sans perturber l'activité agricole. Cette solution s'inscrit parfaitement dans un contexte où les alternatives écologiques et durables sont recherchées pour la gestion des nuisibles.

L'invention se distingue par son application pratique et ciblée de la technologie infrarouge en plein champ, permettant une réduction significative des insectes tout en respectant les normes écologiques et sanitaires.

Les infrarouges chauffent préférentiellement les criocères sans affecter l'environnement autour d'eux. Cette nouvelle technologique se distingue par l'absence de produits chimiques, répondant ainsi à un besoin croissant d'alternatives durables à la réglementation stricte sur les pesticides.

Cette technologie s'appuie sur un phénomène physique (chauffage par rayonnement infrarouge) qui est plus ciblé et potentiellement moins invasif que d'autres méthodes chimiques ou mécaniques actuellement utilisées dans l'agriculture.

Les Infrarouges comme méthode de traitement est une approche novatrice pour résoudre un problème qui se posait jusque-là avec l'usage exclusif de produits chimiques, qui ont des impacts négatifs sur l'environnement et la santé publique.

Cette technologie trouve un avantage particulier pour une utilisation en plein champ.

L'invention résout notamment un problème majeur particulier dans la culture d'asperges, qui est la gestion des ravageurs, notamment les criocères, sans recourir aux produits phytosanitaires.

Selon une caractéristique de l'invention, ladite lampe infrarouge est apte à délivrer une puissance de 3000W.

Ainsi, le module de protection du végétal selon l'invention est capable d'une montée en température très rapide et très importante sur des rangs de culture tels que les asperges afin de tuer des insectes et notamment les criocères qui pourraient détruire des parcelles entières.

L'invention trouve un avantage particulier pour lutter contre les criocères. En effet, le criocère est un insecte qui ne peut pas réguler sa température corporelle. Les fortes montées en température induisent donc sa mort.

Les lampes infrarouges délivrant une grande puissance produisent les meilleurs résultats en termes de vitesse de montée en température par rapport à leur température maximale.

Avec une lampe de 3000W, il est possible d'obtenir un delta de 80° en moins de 30s à 30cm de la surface à échauffer.

Les criocères et d'autres type d'insectes ressentent la chaleur. Une montée en température rapide permet d'éviter qu'ils s'enfuient.

Selon une caractéristique de l'invention, ladite au moins une unité comprend au moins un réflecteur agencé pour rediriger au moins une partie du rayonnement de ladite lampe infrarouge vers ladite ouverture.

L'utilisation d'un réflecteur permet d'optimiser les effets de la lampe infrarouge en limitant les pertes de rayonnements non dirigés vers l'ouverture. Le réflecteur permet de concentrer un maximum d'énergie sur le végétal et ainsi cibler au mieux les insectes.

Selon une forme de réalisation, ladite au moins une lampe infrarouge s'étend dans le châssis selon une direction horizontale et ledit au moins un réflecteur comprend une forme concave s'étendant selon la direction horizontale, ladite au moins une lampe infrarouge étant agencée entre ledit au moins un réflecteur et ladite ouverture.

Un tel réflecteur dimensionné et agencé dans l'unité derrière la lampe infrarouge permet d'éviter l'accumulation de la chaleur et, au contraire, de l'envoyer vers le végétal.

Différents réflecteurs sont compatibles dans le cadre de l'invention. Un réflecteur comprenant un matériau à base d'Oxyde d'Aluminium (Al2O3) résiste à plus de 900°C. Un réflecteur comprenant un matériau à base d'Or (Au) résiste à 450 ~ 500°C maximum. Un réflecteur comprenant un matériau à base d'Oxyde de Titane (TiO2) résiste à plus de 900°C.

Selon une caractéristique de l'invention, ledit au moins un réflecteur comprend un matériau à base d'Oxyde de Titane. Un tel matériau est privilégié pour sa résistance à haute température ainsi que son pouvoir de réflexion plus important.

Selon une caractéristique de l'invention, ledit au moins un réflecteur comprend des ouvertures. Ces ouvertures sont destinées au passage de l'air.

Selon une forme de réalisation de l'invention, chaque lampe infrarouge est équipée d'un réflecteur additionnel en inox perforé sur ses extrémités afin de laisser passer un flux d'air continu au niveau des connexions de la lampe infrarouge et ainsi d'empêcher le risque de dessouder les connexions sous l'impact de la chaleur.

La mise en œuvre d'un système de ventilation favorise le rayonnement thermique, notamment dans le cas d'utilisation de lampe pouvant délivrer une puissance de 3000W.

Selon une caractéristique de l'invention, ladite au moins une unité est montée amovible sur le châssis.

La mise en œuvre d'au moins une unité amovible permet de définir différentes positions pour ladite au moins une unité sur le châssis. Cela permet notamment de pouvoir orienter la surface de travail de ladite au moins une lampe infrarouge et ainsi s'adapter à différentes formes de culture végétale en fonction de leur type ou même encore de leur croissance.

Selon une forme de réalisation de l'invention, le châssis comprend une moins une plaque comportant un ensemble de trous d'indexage définissant différentes positions pour fixer ladite au moins une unité.

Les trous d'indexage sont une solution facile à mettre en œuvre pour définir différentes positions pour fixer ladite au moins une unité.

Le châssis a ainsi la possibilité de régler l'inclinaison d'une unité pour resserrer ou élargir le faisceau de rayonnement afin de s'adapter au mieux à la forme du végétal à traiter, par exemple au volume du sillon à traiter.

Ce système à unité inclinable permet de s'adapter à tous types de terrain ou de plante à traiter.

Selon une caractéristique de l'invention, ladite au moins une unité comprend des positions inclinées sur le châssis. Les trous d'indexage sont agencés sur la plaque de manière à définir différents plans d'inclinaison pour une unité formant ainsi un système de modulation de la focalisation du rayonnement lumineux infrarouge.

Ces fonctions de variation de position des unités et de puissance permet également d'influer sur la vitesse de passage dans le rang.

Selon une autre forme de réalisation, le châssis du module comprend des moyens d'extension. De tels moyens d'extension permettent de moduler la taille du châssis et notamment au moins une partie de sa largeur. Ainsi, une unité peut être fixée à différents endroits du châssis. Le module permet alors de couvrir une surface allant jusqu'à deux mètres et peut ainsi être dirigé vers plusieurs rangs de végétaux.

Selon une autre caractéristique de l'invention, ladite au moins une unité comprend au moins un « silent bloc » au niveau de la fixation au châssis.

Il est à noter que le terme « silent bloc » est à l'origine le nom d'une marque industrielle déposée par la société française Paulstra désignant une articulation élastique. Le terme est aujourd'hui passé dans le langage courant et désigne des supports anti-vibratoires. Il apparait notamment dans les dictionnaires de langue française.

Le « silent bloc » est ainsi une pièce composée de matériau souple comme du caoutchouc naturel ou de l'élastomère, à l'intérieur d'une barre creuse. Cette pièce va permettre d'absorber les vibrations et les impacts entre deux pièces, deux blocs mécaniques, afin augmenter la durée de vie et diminuer les nuisances sonores.

Selon encore une autre caractéristique de l'invention, le châssis comprend une platine de fixation pour un bras d'un engin agricole

La montée en température de l'ensemble des pièces mécaniques ainsi que de la lampe infrarouge provoque en effet une forte modification dimensionnelle de celle-ci. De plus, le module de protection du végétal est destiné à être monté au bout d'un bras pour l'animer d'un mouvement. Selon une forme d'utilisation le bras est lui-même monté sur un engin agricole de type tracteur. Les mouvements du module de protection du végétal associés aux vibrations de l'engin agricole peuvent endommager ladite au moins une lampe infrarouge. Ainsi monter ladite au moins une unité le châssis via au moins un « silent bloc » permet de limiter les vibrations transmises.

Un « silent bloc » compatible avec l'invention comprend un niveau de dureté de Shore A 45 qui présente un bon compromis entre un système trop mou qui va être trop élastique et un système, au contraire, trop dur qui n'aurait aucun effet et retransmettrait toutes les vibrations de l'engin agricole.

Selon une forme de réalisation de l'invention, le module de protection du végétal comprend six unités, deux ensembles en série de trois unités s'étendant parallèlement les unes aux autres sur le châssis, chaque unité portant deux lampes infrarouges de 3000W.

Selon cette configuration, le châssis comprend douze lampes infrarouges de 3000W, soit une consommation totale du module de protection du végétal de 36000W maximum, modulable en trois puissances qui sont 12000W, 24000W et 36000W. Cela permet d'ajuster la chaleur en fonction de la quantité d'insectes à éradiquer.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

De plus, diverses autres caractéristiques de l'invention ressortent de la description annexée effectuée en référence aux dessins qui illustrent des formes, non limitatives, de réalisation de l'invention et où :
[Fig.1] est une vue en perspective d'un exemple de réalisation d'un module de protection du végétal selon l'invention
[Fig.2] est une vue du dessus de la figure 1 présentant un plan de coupe AA,
[Fig.3] est une vue en perspective de l'exemple de réalisation d'un module de protection du végétal de la figure 1 selon un angle différent,
[Fig.4] est une vue en demi-coupe selon le plan de coupe AA de la figure 2,
[Fig.5] est un détail de la figure 3,
[Fig.6] est une vue en perspective d'un exemple de réalisation d'un élément de maintien selon l'invention,

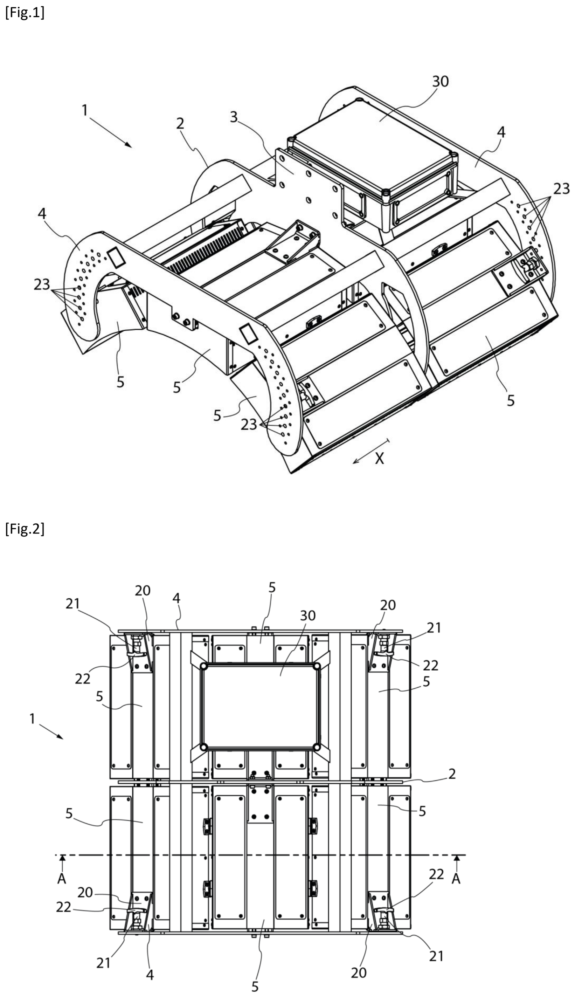

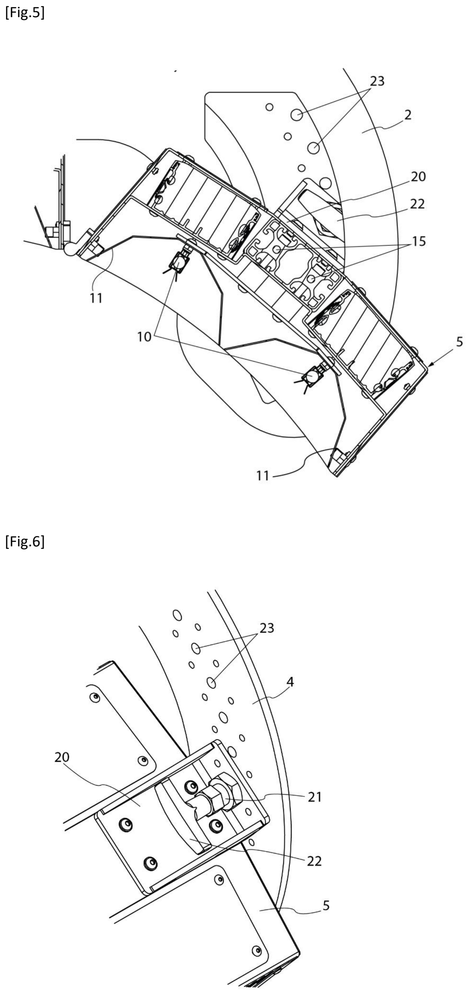

[Fig.6] est une vue d'un détail de la figure 1, et

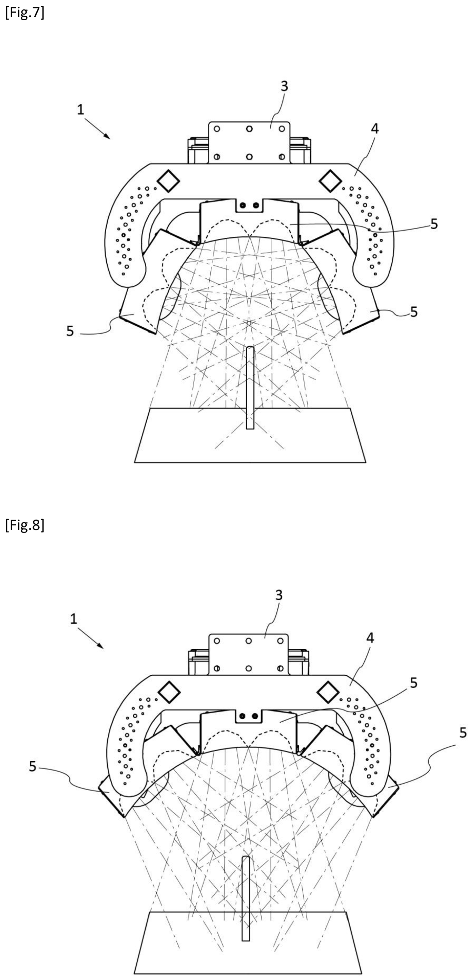

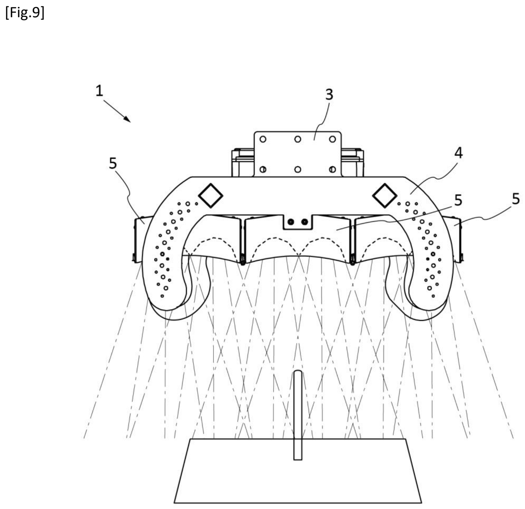

[Fig.7], [Fig.8] et [Fig.9] sont des vues de face de différentes configurations de l'exemple de réalisation de la figure 1.

Il est à noter que sur ces figures les éléments structurels et/ou fonctionnels communs aux différentes variantes peuvent présenter les mêmes références.

L'invention vise à proposer un module de protection du végétal pour lutter contre les insectes.

A ces fins, le module de protection du végétal désigné par la référence 1 tel qu'illustré aux figures 1 à 3 comprend un châssis 2 comportant une platine de fixation 3 à un bras d'un engin agricole (non représenté).

Le châssis 2 comprend deux plaques 4 parallèles entre lesquelles sont montées des unités 5.

Les plaques 4 comprennent de chaque côté des trous d'indexage 6 pour la fixation d'une unité 5.

Selon la forme de réalisation illustrée, trois unités 5 sont parallèles entre elles sur le châssis 2, les trois unités 5 étant reliées chacune à une autre unité 5 montée en série.

D'autres formes de configurations sont compatibles dans le cadre de l'invention. Par exemple, seules trois unités 5 sont montées parallèlement entre elles sur le châssis 2.

Selon une forme de réalisation non illustrée, les plaques 4 sont munies de moyens d'extension. Par exemple, une partie de la plaque peut être montée en translation de manière à élargir le châssis 2. Ainsi des unités 5 sont montées espacées sur le châssis 2 et le module 1 couvre une plus grande surface, par exemple trois rangées de végétaux.

Selon la forme de réalisation illustrée, une unité 5 a une forme sensiblement parallélépipédique définissant un espace intérieur et muni d'une ouverture sur l'une de ses faces, en l'espèce une face est complètement ouverte.

L'unité 5 comprend au moins une source lumineuse apte à émettre un rayonnement dans le spectre infrarouge en direction de l'ouverture. Selon la forme de réalisation illustrée, l'unité 5 comprend deux sources lumineuses, chaque source lumineuse comportant une lampe infrarouge 10.

La lampe infrarouge 10 comprend une forme tubulaire qui s'étend selon une direction horizontale X dans l'unité 5.

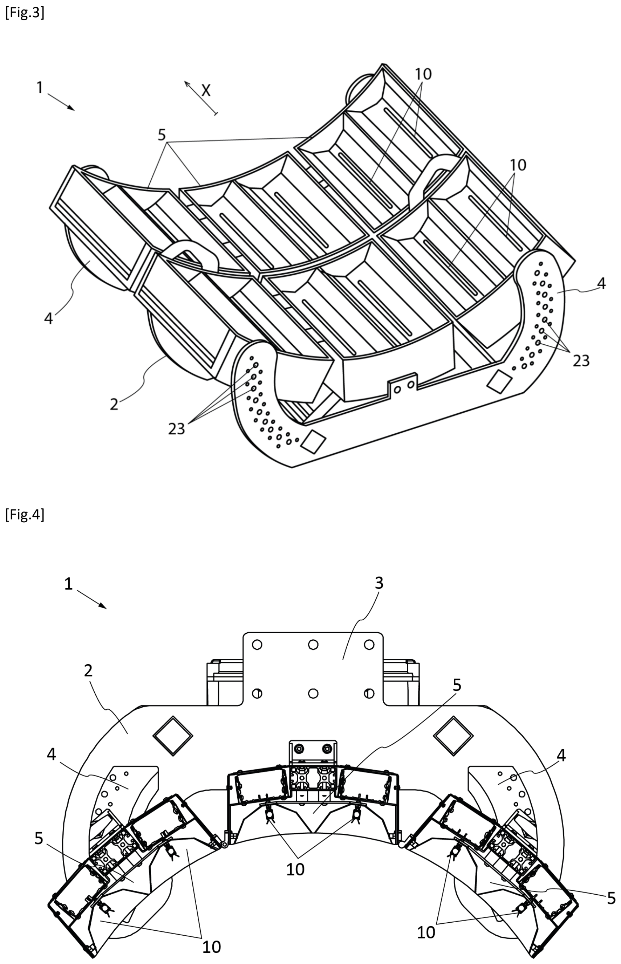

Les figures 4 et 5 illustrent une vue en coupe de l'exemple de réalisation d'une unité 5. L'unité 5 illustrée comprend deux lampes infrarouges 10 parallèles entre elles.

L'unité 5 comprend également deux réflecteurs 11 aptes à réfléchir le rayonnement de chacune des lampes infrarouges 10 vers l'ouverture.

Le réflecteur 11 illustré comprend une forme concave s'étendant selon la direction horizontale X. Visible notamment à la figure 5, le réflecteur 11 est formé par quatre panneaux réfléchissants.

L'unité 5 comprend également deux « silent blocs » 15. Les « silent blocs » 15 sont composés d'un matériau élastique destinées à absorber les vibrations et les chocs lors de l'utilisation du module de protection du végétal 1.

Selon la forme de réalisation illustrée, un premier ensemble est fixe sur le châssis 2. De part et d'autre de ce premier ensemble fixe, un deuxième et un troisième ensembles sont montés amovibles sur le châssis 2. Chaque ensemble comprend deux unités 5 montées en série.

Les deuxième et troisième ensembles sont orientables sur le châssis 2. Chaque deuxième et troisième ensemble comprend à ces fins un support de fixation 20 muni d'un trou débouchant pour le passage d'un système de boulonnage 21 muni d'une poignée 22.

Selon la forme de réalisation illustrée, les deuxième et troisième ensembles comprennent chacun deux unités 5 et chacune de ces unités 5 comprend un support de fixation 20 de manière à pour voir indexer les deuxième et troisième ensembles entre les plaques 4 du châssis 2.

A ces fins, la plaque comporte des trous d'indexage 23 aptes au passage du système de boulonnage 21.

Le système de boulonnage 21 notamment visible à la figure 6 permet de fixer une unité 5 sur l'un des trous d'indexage 23 d'une plaque 4 du châssis 2.

L'unité 5 comprend des connecteurs (non représentés) pour alimenter et commander les lampes infrarouges 10.

Le module de protection du végétal 1 comprend un caisson électrique 30 fixé au châssis 2 et destiné à recevoir les connectiques nécessaires (non représentés).

Pour utiliser le module de protection du végétal 1 tel que décrit, une unité de commande (non représentée) agit sur le caisson électrique 30 pour commander les lampes infrarouges 10.

Le module de protection du végétal 1 et notamment l'ouverture de chaque unité 5 est placée au-dessus d'un végétal. Les figures 7 à 9 illustrent différentes configurations des unités 5 sur le châssis 2.

Le fonctionnement de la lampe infrarouge 3 permet d'agir efficacement sur les insectes situés à proximité du végétal.

Selon une forme d'utilisation non décrite ici, le module de protection du végétal 1 est monté sur un engin agricole permettant de le déplacer le long d'un rang de végétaux.

Bien entendu, diverses autres modifications peuvent être apportées à l'invention dans le cadre des revendications annexées.

## Revendications

1. Module de protection du végétal (1) comprenant un châssis (2) sur lequel est montée au moins une unité (5), une unité (5) munie d'une ouverture et dans lequel est agencé au moins une source lumineuse apte à émettre un rayonnement dans le spectre infrarouge en direction de l'ouverture, **caractérisé en ce que** ladite au moins une source lumineuse comprend une lampe infrarouge (10).

2. Module de protection du végétal (1) selon la revendication précédente dans lequel ladite lampe infrarouge (10) est apte à délivrer une puissance de 3000W.

3. Module de protection du végétal (1) selon l'une des revendications précédentes dans lequel ladite au moins une unité (5) comprend au moins un réflecteur (11) agencé pour rediriger au moins une partie du rayonnement de ladite lampe infrarouge (10) vers ladite ouverture.

4. Module de protection du végétal (1) selon la revendication précédente dans lequel ledit au moins un réflecteur (11) comprend un matériau à base d'Oxyde de Titane.

5. Module de protection du végétal (1) selon l'une des revendications 3 ou 4 dans lequel ladite au moins une lampe infrarouge (10) s'étend dans ladite au moins une unité (5) selon une direction horizontale (X) et ledit au moins un réflecteur (11) comprend une forme concave s'étendant selon la direction horizontale (X), ladite au moins une lampe infrarouge (10) étant agencée entre ledit au moins un réflecteur (11) et ladite ouverture.

6. Module de protection végétal selon l'une des revendications 3 à 5 dans lequel ledit au moins un réflecteur (11) comprend des ouvertures.

7. Module de protection du végétal (1) selon l'une des revendications précédentes dans lequel ladite au moins une unité (5) est montée amovible sur le châssis (2) .

8. Module de protection du végétal (1) selon l'une des revendications précédentes dans lequel le châssis (2) comprend une moins une plaque (4) comportant un ensemble de trous d'indexage (23) définissant différentes positions pour fixer ladite au moins une unité (5).

9. Module de protection du végétal selon la revendication précédente dans lequel ladite au moins une unité (5) comprend des positions inclinées sur le châssis (2).

10. Module de protection du végétal (1) selon l'une des revendications précédentes dans lequel ladite au moins une unité (5) comprend au moins un silent bloc (15) au niveau de la fixation au châssis (2) .

11. Module de protection du végétal (1) selon l'une des revendications précédentes comprenant six unités (5), deux ensembles en série de trois unités (5) s'étendant parallèlement les unes aux autres sur le châssis (2), chaque unité (5) portant deux lampes infrarouges (10) de 3000W.

12. Module de protection du végétal (1) selon l'une des revendications précédentes dans lequel le châssis (2) comprend une platine de fixation (3) pour un bras d'un engin agricole.
